# EUROPEAN PATENT SPECIFICATION

(11) **EP 1 691 532 B1**
(45) Date of publication and mention of the grant of the patent: **02.02.2011**
(21) Application number: 06011238.0
(22) Date of filing: 06.12.2004
(51) Int. Cl.: H04M 1/02, H04B 1/38, H04M 1/725

(54) **Slide type portable communication terminal**
Tragbares, verschiebbares Funkkommunikationsendegerät
Terminal de communication radio portable de type coulissant

(30) Priority: 09.12.2003 KR 20030089109
(43) Date of publication of application: 16.08.2006
(62) Divisional of application: 04028855.7
(73) Proprietor: LG Electronics Inc., Seoul, 150-721 (KR)
(72) Inventor: Byeong-Sung, Hong, Songpa-Gu Seoul (KR); Hye-Jeong, Choi, Seodaemun-Gu Seoul (KR); Kim, Jong-Cheol, Gusung-Eup Yongin Gyeonggi-Do (KR); Jee-Yeon, Kim, Nowon-Gu Seoul (KR); Seung-II, Lee, Eunpyeong-Gu Seoul (KR); Hyun-Sook, Park, Gangnam-Gu Seoul (KR)
(74) Representative: Beyer, Andreas

(56) References cited:
- EP-A- 1 298 909
- EP-A1- 0 963 100
- EP-A1- 1 499 094

## Description

### BACKGROUND OF THE INVENTION

### Field of the Invention

The present invention relates to a slide type portable communication terminal, and more particularly, to a slide type portable communication terminal having a body unit and a display unit slidably mounted at a front surface of the body unit capable of automatically controlling a position of a display unit according to a general mode and a camera activation mode.

### Description of the Related Art

Generally, portable communication terminals may be described as either a flip-type, wherein a flip cover is rotatably mounted at a body for opening and closing an input button region, or a folder type comprising a body having input buttons and a folder rotatably mounted at the body, wherein the folder may house a viewable display.

Accordingly, as the need for communication terminals having large display units for displaying various information grows, a slide type portable communication terminal having a a large display at a front surface of a body unit capable of being opened and closed by a slide method is being developed.

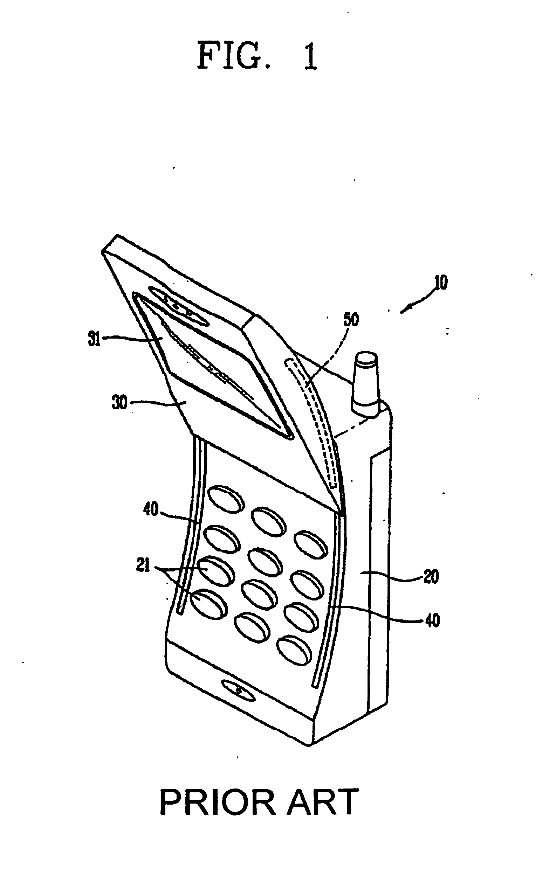

FIG. 1 is a perspective view showing a slide type portable communication terminal in accordance with the related art. The related art slide type portable communication terminal 10 comprises a body unit 20 having adjustment buttons 21 at a front surface of the body unit, a display unit 30 slidably mounted at the front surface of the body unit 20 and having a display 31 for displaying information, and a sliding unit 40, 50 installed between the body unit 20 and the display unit 30, for slidably opening and closing the display unit 30.

The sliding unit comprises guide grooves 40 formed at both sides of the front surface of the body unit 20 in a longitudinal direction and guide rails 50 formed at both sides of a rear surface of the display unit 30. The guide rails are inserted into the guide grooves in order to be moved in the longitudinal direction.

Accordingly, the related art slide type portable communication terminal allows a user to open and close the terminal by pushing the display unit 30 in an upper or lower direction of the body unit 20 using the guide groove 40 and the guide rail 50 inserted therein. However, a problem exists because the display unit has to be manually pushed upwardly or downwardly in order to use the terminal. Thus, the user is inconvenienced.

EP-A-0 963 100 discloses a mobile communications device having two body parts and a camera mounted to one of these parts. The two body parts cover each other alternatively completely in the transport position of the camera or partly in the operational position of the camera in order to protect the camera during transport.

EP-A-1 298 909 discloses a mobile communications terminal having a body with a display, a speaker, a camera and a keypad. A display cover is slidably connected to the body and is moveable over the display between at least two positions. When the cover is in one of these positions, the camera is activated and the display operates as a viewfinder for the camera.

EP-A-1 499 094, which was published after the priority date of the present invention and is therefore relevant to novelty only, discloses a bi-directional sliding-type portable terminal comprising a camera. No information is given on the type of connection between the two body parts of the sliding-type portable terminal.

US-A-2003/0064688 discloses a mobile communications terminal showing the features mentioned in the preamble of claim 1. Accordingly, the mobile communications terminal has a body unit and a display unit slidably mounted at a front surface of the body unit. A guide unit operating with the body unit and the display unit is adapted to guide a sliding movement of the display unit relative to the body unit. Specifically, the display unit can slide in an upward direction to expose one end portion of the body unit, thus giving access to a main operating section of the mobile communications terminal. Guide rails attached to the display unit are provided with a bracket which is bent downward to form an engagement piece. Further, a stop protrusion piece is attached to the display unit to act as a stopper in the extension direction.

### SUMMARY OF THE INVENTION

The present invention is directed to a to a slide type portable communication terminal having a body unit and a display unit slidably mounted at a front surface of the body unit capable of automatically slide-moving a display unit on a body unit from a first position upwardly to a second position or downwardly to a third position according to a user's desired mode, such as a general mode or a camera activation mode.

The present invention provides a slide type portable communication terminal having the features recited in claim 1. Advantageous modifications are set out in the dependent claims.

Additional features and advantages of the invention will be set forth in the description which follows, and in part will be apparent from the description, or may be learned by practice of the invention. The objectives and other advantages of the invention will be realized and attained by the structure particularly pointed out in the written description and claims hereof as well as the appended drawings.

To achieve these and other advantages and in accordance with the purpose of the present invention, as embodied and broadly described, there is provided a slide type portable communication terminal comprising a body unit, a display unit slidably mounted at a front surface of the body unit, a guide unit operating with the display unit and body unit for guiding slide-movement of the display unit, a driving unit for moving the display unit, and a switching unit for sensing motion of the display unit and controlling the driving unit to move the display unit, wherein upon the switching unit sensing the display unit being manually moved in a desired direction, the switching unit controls the driving unit to automatically drive the display unit in the desired direction.

When the display unit is manually pushed in an upper direction with respect to the body unit, the driving unit automatically drives the display unit in the upper direction to expose a lower portion of the body unit. When the display unit is manually pushed in a lower direction with respect to the body unit, the driving unit automatically drives the display unit in the lower direction to expose an upper portion of the body unit.

In an exemplary embodiment, the switching unit senses motion of the display unit by sensing movement of at least one magnet formed on the display unit by a magnet detecting unit formed on the body unit. The switching unit controls the driving unit to automatically stop movement of the display unit by detecting a position of at least one magnet formed on the display unit by a magnet detecting unit formed on the body unit.

The guide unit comprises at least one guide groove formed at a rear surface of the display unit in a longitudinal direction and at least one guide hook formed at a front surface of the body unit, wherein the at least one guide hook is fittedly coupled to the at least one guide groove. The driving unit comprises a driving motor mounted at the body unit for generating a rotational force, a pinion gear coupled to the driving motor, and a rack gear formed at a rear surface of the display unit in a longitudinal direction and engaged with the pinion gear. A hole is formed at a side of the front surface of the body unit, wherein a portion of the pinion gear protrudes out of the hole.

The switching unit comprises a plurality of magnets formed at a rear surface of the display unit, wherein the magnets are spaced apart from each other in a longitudinal direction, a magnet detecting unit formed inside the body unit for detecting a position of each magnet, and a control unit for selectively driving the driving unit according to a detection signal of the magnet detecting unit. A plurality of magnet mounting grooves are formed at the rear surface of the display unit for respectively mounting the plurality of magnets.

In an exemplary embodiment, the magnet detecting unit comprises a first magnet sensor formed at an inner side of the body unit and a second magnet sensor formed at an inner side of the body unit, wherein the first magnet sensor and the second magnet sensor are spaced apart from each other in a longitudinal direction. A direction the control unit automatically drives the driving unit is dependent upon the sequence in which the first and second magnet sensors of the body unit lose sense of one of the plurality of magnets formed on the display unit.

In one aspect, the plurality of magnets comprises a first magnet, a second magnet, and a third magnet. As the display unit moves toward an upper direction with respect to the body unit, the control unit controls the driving unit to stop movement of the display unit upon detection of the first magnet by the magnet detecting unit. As the display unit moves toward a lower direction with respect to the body unit, the control unit controls the driving unit to stop movement of the display unit upon detection of the third magnet by the magnet detecting unit. As the display unit is moved so as to completely cover the body unit, the control controls the driving unit to stop movement of the display unit upon detection of the second magnet by the magnet detecting unit.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.
- FIG. 1: is a perspective view of a slide type portable communication terminal in accordance with the related art.
- FIG. 2: is a perspective view of a slide type portable communication terminal with a display unit covering a body unit in accordance with one embodiment of the invention.
- FIG. 3: is a perspective view of a slide type portable communication terminal with a display unit opened towards an upper direction of the body unit in accordance with one embodiment of the invention.
- FIG. 4: is a perspective view of a slide type portable communication terminal with a display unit opened towards a lower direction of the body unit in accordance with one embodiment of the invention.
- FIG. 5: is a disassembled perspective view of a slide type portable communication terminal in accordance with one embodiment of the invention.
- FIG. 6: is a longitudinal section view of a guide unit of a slide type portable communication terminal in accordance with one embodiment of the invention.
- FIG. 7: is an operational state side view of a slide type portable communication terminal in accordance with one embodiment of the invention.
- FIG. 8: is an operational state side view of a slide type portable communication terminal in accordance with one embodiment of the invention.
- FIG. 9: is an operational state side view of a slide type portable communication terminal in accordance with one embodiment of the invention.

### DETAILED DESCRIPTION OF THE PREFERRED EMBODIMENTS

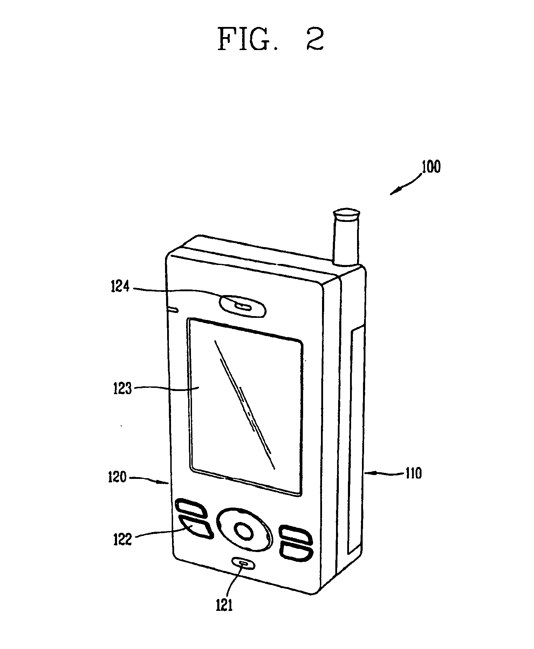

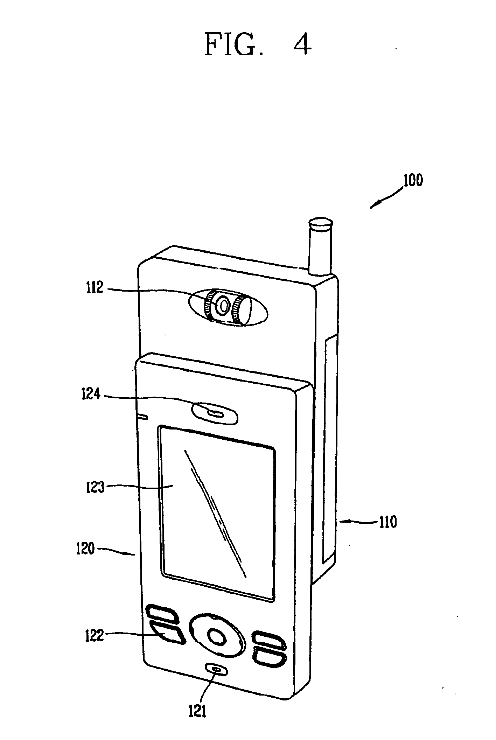

Referring to FIGS. 2-6, a slide type portable communication terminal 100 comprises a body unit 110, a display unit 120 slidably mounted at a front surface of the body unit 110, a guide unit 130 operating with the body unit 110 and the display unit 120 for guiding slide-movement of the display unit 120, and a display unit slide moving unit for selectively slide-moving the display unit 120 in a longitudinal direction of the body unit 110.

A first button unit 111 is formed at a lower side of the front surface of the body unit 110, and a camera module 112 is formed at an upper side of the front surface of the body unit 110. A voice transmission portion 121 and a second button unit 122 are formed at a lower side of a front surface of the display unit 120. A display window 123 is formed at a middle portion of the front surface of the display unit 120. Preferably, the display window 123 is a liquid crystal display (LCD) window. A voice reception portion 124 is formed at an upper portion of the front surface of the display unit 120.

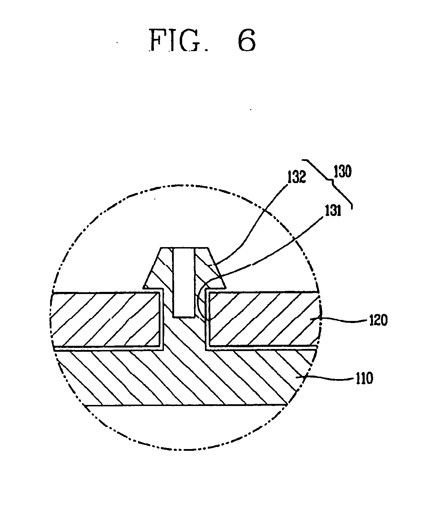

The guide unit 130 comprises at least one guide groove 131 formed at a rear surface of the display unit 120 in a longitudinal direction and at least one guide hook 132 formed at a front surface of the body unit 110, wherein the guide hook 132 is fittedly coupled to the guide groove 131. As shown in FIG. 6, the guide hook 132 is protruded at the front surface of the body unit 110, wherein the end of the guide hook 132 diverges to its sides thus increasing the guide hook's elastic strength.
When the guide hook 132 is fitted into the guide groove 131, the guide hook 132 is caught by an inner side surface of the guide groove 131 thereby preventing detachment of the guide hook 132 from the guide groove.

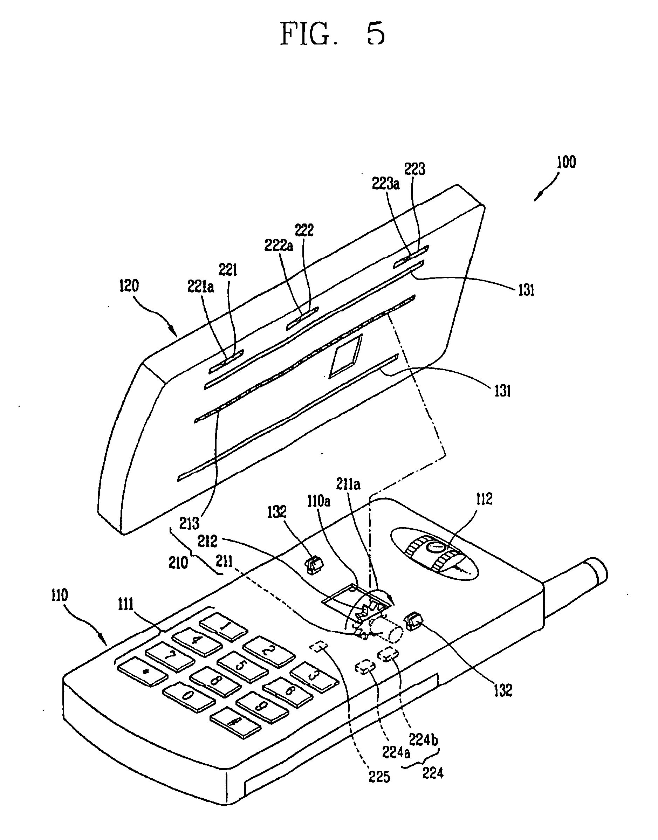

A display unit slide moving unit comprises a driving unit 210 for linearly moving the display unit 120 and a switching unit for detecting motion of the display unit 120 and thereby controlling the driving unit 210 to move the display unit 120 to a user's desired position. As shown in FIG. 5, the driving unit 210 comprises a driving motor 211 mounted at the body unit 110 for generating a rotational force, a pinion gear 212 coupled to the driving motor 211, and a rack gear 213 formed at a rear surface of the display unit 120 in a longitudinal direction and engaged with the pinion gear 212. A hole 110a is formed at a side of the front surface of the body unit 110, wherein a portion of the pinion gear 212 protrudes out of the hole 110a. This allows the pinion gear 212 to smoothly engage with the rack gear 213.

The switching unit comprises a first magnet 221, a second magnet 222 and a third magnet 223 formed at the rear surface of the display unit 120. The magnets are spaced apart by a certain interval in a longitudinal direction. The switching unit further comprises a magnet detecting unit 224 formed inside the body unit 110 for detecting a position of each magnet and a control unit 225 for selectively driving the driving motor 211 according to a detection signal of the magnet detecting unit 224. The first, second, and third magnets 221, 222, and 223 are respectively mounted at first, second, and third magnet mounting grooves 221a, 222a, and 223a formed at the rear surface of the display unit 120.

The magnet detecting unit 224 comprises a first magnet sensor 224a formed at an inner side of the body unit 110 and a second magnet sensor 224b also formed at an inner side of the body unit 110. The first magnet sensor and the second magnet sensor are spaced apart from each other by a certain interval in a longitudinal direction.

In accordance with one embodiment of the invention, operation of the slide type portable communication terminal will now be explained. Preferably, the display unit 120 of the slide type portable communication terminal 100 may placed in three positions on the body unit 110. For example, the display unit 120 may completely close (cover) the body unit 110. Furthermore, the display unit 120 may be positioned at an end of the body unit 110 in an upper direction. Alternatively, the display unit 120 may be positioned at an end of the body unit 110 in a lower direction.

When the display unit 120 is completely pushed towards the upper direction with respect to the body unit 110, a general mode (a general call mode) may be performed. When the display unit 120 is completely pushed towards the lower direction with respect to the body unit 110, a camera activation mode may be performed.

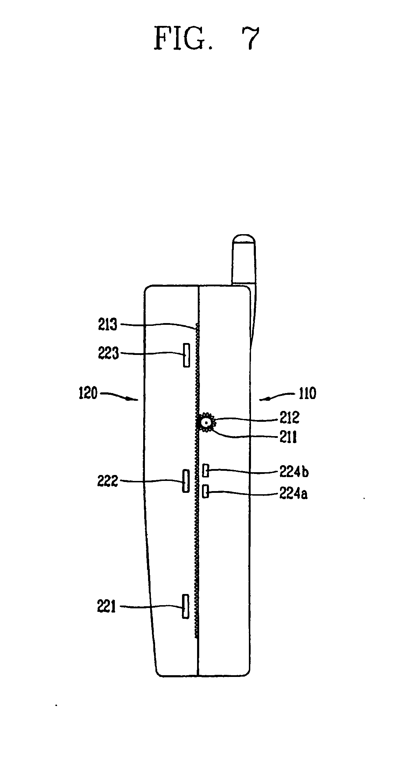

Referring to FIG. 7, the display unit 120 may completely close or cover the body unit 110, in which the first magnet sensor 224a and the second magnet sensor 224b detect only the second magnet 222. When a user wants to perform the general mode, the user pushes the display unit 120 towards the upper direction of the body unit 110 to thereby move the display unit 120 upwardly along the guide unit 130.

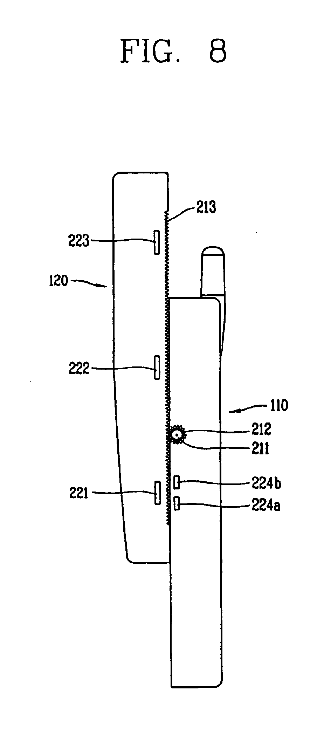

As shown in FIG. 8, once the display unit 120 is upwardly moved, the second magnet 222 becomes spaced apart from the first magnet sensor 224a and the second magnet sensor 224b. Accordingly, the first magnet sensor 224a and the second magnet sensor 224b sequentially lose sense of the second magnet 222. Specifically, as the display unit 120 is upwardly moved, the first magnet sensor 224a initially loses sense of the second magnet 222 before the second magnet sensor 224b loses sense of the second magnet 222 as well. Due to this sequence, the control unit 225, as shown in FIG. 5, drives the driving motor 211 in a forward direction in the direction of arrow 211a. Consequently, the driving motor 211 rotates the pinion gear 212 in a forward direction to thereby move the rack gear 213 engaged thereto and thus move the display unit 120 in the upper direction of the body unit 110.

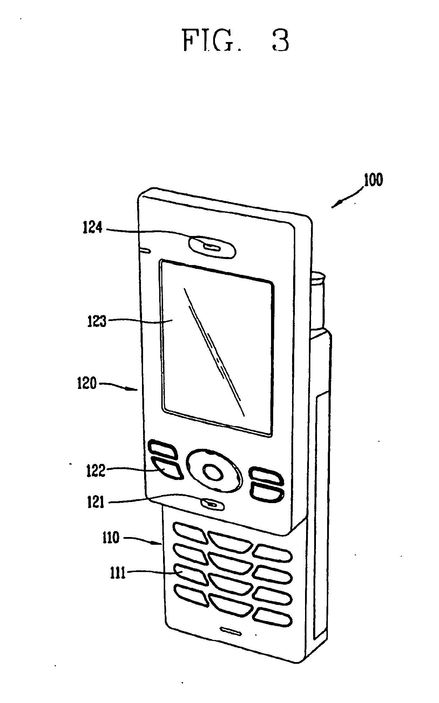

As the display unit 120 is moved towards the upper direction of the body unit 110, the first magnet 221 nears the first magnet sensor 224a and the second magnet sensor 224b. Upon detection of the first magnet 221 by the magnet sensors, the control unit 225 stops driving the driving motor 211 to thereby stop movement of the display unit 120. When the display unit 120 is completely moved in the upper direction of the body unit 110, the first button unit 111, as shown in FIG. 3, becomes exposed allowing the user to manipulate the buttons and perform the general mode.

After finishing the general mode, the user may push the display unit 120 downwardly to move it toward the lower direction of the body unit 110 along the guide unit 130. As the display unit moves downwardly, the first magnet 221 becomes spaced apart from the second magnet sensor 224b and the first magnet sensor 224a. Accordingly, the second magnet sensor 224b and the first magnet sensor 224a sequentially lose sense of the first magnet 221. Specifically, as the display unit 120 is downwardly moved, the second magnet sensor 224b initially loses sense of the first magnet 221 before the first magnet sensor 224a loses sense of the first magnet 221 as well.

Due to this sequence, the control unit 225, as shown in FIG. 5, drives the driving motor 211 in a reverse direction or a direction opposite to the arrow 211a. Consequently, the driving motor rotates the pinion gear 212 in a reverse direction to thereby move the rack gear 213 engaged thereto and thus move the display unit 120 downwardly to a position at the front surface of the body unit 110, as shown in FIG. 7.

As the display unit 120 is moved towards the front surface of the body unit 110, the second magnet 222 nears the first magnet sensor 224a and the second magnet sensor 224b. Upon detection of the second magnet 222 by the magnet sensors, the control unit 225 stops driving the driving motor 211 to thereby stop movement of the display unit 120. Accordingly, the display unit 120 completely closes (covers) the front surface of the body unit 110.

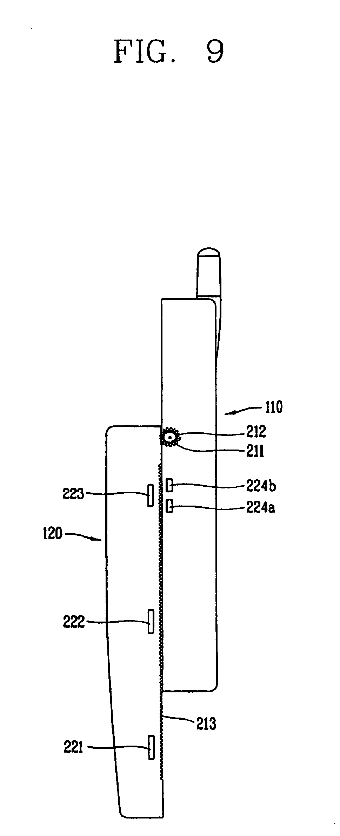

When the front surface of the body unit 110 is completely covered by the display unit 120, the user may push the display unit 120 towards the lower direction of the body unit 110 along the guide unit 130 in order to use a video phone mode. Referring to FIG. 9, as the display unit 120 is moved downwardly, the second magnet 222 becomes spaced apart from the second magnet sensor 224b and the first magnet sensor 224a. Contrary to the aforementioned general mode, the second magnet sensor 224b and first magnet sensor 224a sequentially lose sense of the second magnet 222. Specifically, as the display unit 120 is downwardly moved, the second magnet sensor 224b initially loses sense of the second magnet 222 before the first magnet sensor 224a loses sense of the second magnet 222 as well.

Due to this sequence, the control unit 225, as shown in FIG. 5, drives the driving motor 211 in a reverse direction or a direction opposite to the arrow 211a to thereby rotate the pinion gear 212 in a reverse direction. Accordingly, the rack gear 213 engaged to the pinion gear 212 moves the display unit 120 toward the lower direction of the body unit 110.

As the display unit 120 moves toward the lower direction of the body unit 110, the third magnet 223 nears the second magnet sensor 224b and the first magnet sensor 224a. Upon detection of the third magnet 223 by the magnet sensors, the control unit 225 stops driving the driving motor 211 to thereby stop movement of the display unit 120. When the display unit 120 is completely moved in the lower direction of the body unit 110, the camera module (assembly) 112 becomes exposed allowing the user to perform the camera activation mode.

After finishing the camera activation mode, the user may push the display unit 120 toward the upper direction of the body unit 110 along the guide unit 130. As the display unit moves upwardly, the third magnet 223 becomes spaced apart from the first magnet sensor 224a and the second magnet sensor 224b. Accordingly, the first magnet sensor 224a and the second magnet sensor 224b sequentially lose sense of the third magnet 223. Specifically, as the display unit 120 is upwardly moved, the first magnet sensor 224a initially loses sense of the third magnet 223 before the second magnet sensor 224b loses sense of the third magnet 223 as well. Due to this sequence, the control unit 225, as shown in FIG. 5, drives the driving motor 211 in a forward direction in the direction of arrow 211a. Consequently, the driving motor rotates the pinion gear 212 in a forward direction to thereby move the rack gear 213 engaged thereto and thus move the display unit 120 upwardly to a position at the front surface of the body unit 110.

As the display unit 120 moves toward the front surface of the body unit 110, the second magnet 222 nears the first magnet sensor 224a and the second magnet sensor 224b. Upon detection of the second magnet 222 by the magnet sensors, the control unit 225 stops driving the driving motor 211. By stopping the driving motor 211, the display unit 120 maintains a state of covering the front surface of the body unit 110.

The slide type portable communication terminal according to one embodiment of the invention is operated as follows. When the user pushes the display unit 120 either towards the upper direction of the body unit 110 to use a general mode or towards the lower direction of the body unit 110 to use a camera activation mode, the display unit 120 is automatically slide-moved according to a detection signal of the first, second, and third magnets 221, 222, and 223 sensed by the first magnet sensor 224a and the second magnet sensor 224b to thereby open the body unit 110.

When the display unit 120 is moved in a direction to cover the body unit 110 during either a general mode or a camera activation mode, the first magnet sensor 224a and the second magnet sensor 224b detect the second magnet 222 as the second magnet nears the magnet sensors. Upon detection of the second magnet 222, the control unit 225 stops driving the driving motor 211 to stop movement of the display unit 120 and position the display unit 120 at the front surface of the body unit 110.

Therefore, it is apparent that in the slide type portable communication terminal of the present invention, a user is greatly convenienced by being able to automatically slide-move the display unit into his/her desired mode.

It is noteworthy, that although magnetic sensors are used to describe the present invention, other sensors, such as a mechanical or pressure switch, may be used.

As the present invention may be embodied in several forms without departing from the essential characteristics thereof, it should be understood that the invention is not limited by the details of the preferred embodiments described above, but rather should be construed broadly within the scope of the appended claims.

## Claims

1. A slide type portable communication terminal (100) comprising:
a body unit (110);
a display unit (120) slidably mounted at a front surface of the body unit (110); and
a guide unit (130) operating with the body unit (110) and display unit (120) for guiding slide-movement of the display unit (120) relative to the body unit (110);
wherein the guide unit (130) comprises a first element extending from a bottom portion of the display unit (120) to a top portion of the display unit (120), **characterized in that** the guide unit (130) comprises a second element formed on the body unit (110) to be interoperable with the first element such that the display unit (120) can expose either one of two end portions of the body unit (110) when the second element is located at a corresponding one of two end portions of the first element.

2. The terminal of claim 1,
further comprising a camera module (112) formed at an upper side of the body unit (110), wherein when the camera module (112) is exposed by a slide-movement of the display unit (120), the camera module (112) assumes a camera activation mode.

3. The terminal of claim 2,
further comprising a switching unit for activating the camera module (112) by sensing slide-movement of the display unit (120), wherein
the switching unit comprises:
a magnet (223) provided at a rear surface of the display unit (120), wherein the magnet (223) is positioned at the upper side of the display unit (120);
a magnet detecting unit (224) provided in the body unit (110) for detecting the magnet (223) when the display unit (120) is disposed at a particular position where the camera module (112) is exposed; and
a control unit (225) for selectively driving the camera module (112) according to a detection signal of the magnet detecting unit (224) so that the camera module (112) is activated when the display unit (120) is at the particular position.

4. The terminal of claim 1, wherein
the first element comprises at least one guide groove (131) formed at a rear surface of the display unit (120) in a longitudinal direction; and
the second element comprises at least one guide hook (132) formed at a front surface of the body unit (110), wherein the at least one guide hook (132) is fittedly coupled to the at least one guide groove (131).

## Patentansprüche

1. Tragbares Kommunikationsendgerät (100) vom Schiebetyp mit:
einem Gehäusekörper (110),
einer Anzeigeinheit (120), die verschiebbar an einer Vorderseite des Gehäusekörpers (110) befestigt ist, und
einer Führungseinheit (130), die zur Führung einer Schiebebewegung der Anzeigeinheit (120) relativ zum Gehäusekörper (110) mit dem Gehäusekörper (110) und der Anzeigeinheit (120) zusammenwirkt,
wobei die Führungseinheit (130) ein erstes Element umfasst, das sich von einem unteren Abschnitt der Anzeigeeinheit (120) zu einem oberen Abschnitt der Anzeigeeinheit (120) erstreckt,
**dadurch gekennzeichnet, dass** die Führungseinheit (130) ein zweites Element umfasst, das auf dem Gehäusekörper (110) ausgebildet ist, um mit dem ersten Element so zusammenwirken zu können, dass die Anzeigeeinheit (120) jeden von zwei Endabschnitten des Körpergehäuses (110) freilegen kann, wenn sich das zweite Element an einem entsprechenden von zwei Endabschnitten des ersten Elements befindet.

2. Endgerät nach Anspruch 1,
das ferner ein Kameramodul (112) umfasst, welches an einer Oberseite des Gehäusekörpers (110) ausgebildet ist, wobei, wenn das Kameramodul (112) durch eine Schiebebewegung der Anzeigeeinheit (120) freigelegt wird, das Kameramodul (112) einen Kamera-Aktivierungsmodus einnimmt.

3. Endgerät nach Anspruch 2,
das ferner eine Schalteinheit zum Aktivieren des Kameramoduls (112) durch Erfassen einer Schiebebewegung der Anzeigeeinheit (120) umfasst, wobei die Schalteinheit umfasst:
einen Magneten (223), der an einer Rückseite der Anzeigeinheit (120) vorhanden ist, wobei der Magnet (223) an der Oberseite der Anzeigeeinheit (120) positioniert ist,
eine Magneterkennungseinheit (224), die im Gehäusekörper (110) zum Erkennen des Magneten (223) vorhanden ist, wenn die Anzeigeeinheit (120) in einer bestimmten Position angeordnet ist, in der das Kameramodul (112) freiliegt, und
eine Steuereinheit (225) zum selektiven Antreiben des Kameramoduls (112) gemäß einem Erkennungssignal der Magneterkennungseinheit (224), so dass das Kameramodul (112) aktiviert ist, wenn sich die Anzeigeeinheit (120) in der bestimmten Position befindet.

4. Endgerät nach Anspruch 1,
wobei:
das erste Element wenigstens eine Führungsnut (131) umfasst, die auf einer Rückseite der Anzeigeinheit (120) in Längsrichtung ausgebildet ist, und
das zweite Element wenigstens einen Führungshaken (132) umfasst, der auf einer Vorderseite des Gehäusekörpers (110) ausgebildet ist, wobei der wenigstens eine Führungshaken (132) in die wenigstens eine Führungsnut (131) eingepasst ist.

## Revendications

1. Terminal de communication portable de type coulissant (100) comprenant :
une unité de corps (110) ;
une unité d'affichage (120) montée de façon coulissante au niveau d'une surface avant de l'unité de corps (110) ; et
une unité de guidage (130) fonctionnant avec l'unité de corps (110) et l'unité d'affichage (120) pour guider un mouvement coulissant de l'unité d'affichage (120) par rapport à l'unité de corps (110) ;
dans lequel l'unité de guidage (130) comprend un premier élément s'étendant d'une partie inférieure de l'unité d'affichage (120) jusqu'à une partie supérieure de l'unité d'affichage (120), **caractérisé en ce que** l'unité de guidage (130) comprend un deuxième élément formé sur l'unité de corps (110) de façon à être interopérable avec le premier élément de telle sorte que l'unité d'affichage (120) peut exposer l'une ou l'autre de deux parties d'extrémité de l'unité de corps (110) lorsque le deuxième élément est situé à l'une correspondante de deux parties d'extrémité du premier élément.

2. Terminal selon la revendication 1,
comprenant en outre un module de caméra (112) formé au niveau d'un côté supérieur de l'unité de corps (110), dans lequel, lorsque le module de caméra (112) est exposé par un mouvement coulissant de l'unité d'affichage (120), le module de caméra (112) entre dans un mode d'activation de caméra.

3. Terminal selon la revendication 2,
comprenant en outre une unité de commutation pour activer le module de caméra (112) en détectant le mouvement coulissant de l'unité d'affichage (120), dans lequel
l'unité de commutation comprend :
un aimant (223) prévu au niveau d'une surface arrière de l'unité d'affichage (120), dans lequel l'aimant (223) est positionné au niveau du côté supérieur de l'unité d'affichage (120) ;
une unité de détection d'aimant (224) prévue dans l'unité de corps (110) pour détecter l'aimant (223) lorsque l'unité d'affichage (120) est disposée en une position particulière où le module de caméra (112) est exposé ; et
une unité de commande (225) pour entraîner sélectivement le module de caméra (112) en fonction d'un signal de détection de l'unité de détection d'aimant (224) de telle sorte que le module de caméra (112) est activé lorsque l'unité d'affichage (120) est dans la position particulière.

4. Terminal selon la revendication 1, dans lequel
le premier élément comprend au moins une rainure de guidage (131) formée au niveau d'une surface arrière de l'unité d'affichage (120) dans une direction longitudinale ; et
le deuxième élément comprend au moins un crochet de guidage (132) formé au niveau d'une surface avant de l'unité de corps (110), dans lequel l'au moins un crochet de guidage (132) est raccordé de façon adaptée à l'au moins une rainure de guidage (131).
